# FASCICULE DE BREVET EUROPEEN

(11) **EP 3 885 041 B1**
(45) Date de publication et mention de la délivrance du brevet: **20.11.2024**
(21) Numéro de dépôt: 21164145.1
(22) Date de dépôt: 23.03.2021
(51) Int. Cl.: B01L 3/00, F16J 15/02, F16J 15/06, G21F 7/047, B01L 1/02, F16J 13/18, F16J 13/24, G21F 7/005

(54) **SOUS-ENSEMBLE POUR SYSTÈME DE TRANSFERT A DOUBLE PORTE DE FABRICATION SIMPLIFIÉE**
UNTERBAUGRUPPE FÜR EIN VEREINFACHTES TRANSFERSYSTEM MIT DOPPELTER TÜR
SUBASSEMBLY FOR TRANSFER SYSTEM WITH SIMPLIFIED PRODUCTION DOUBLE DOOR

(30) Priorité: 23.03.2020 FR 2002812
(43) Date de publication de la demande: 29.09.2021
(73) Titulaire: Getinge Life Science France, 41100 Vendôme (FR)
(72) Inventeur: BELIN, Jean, 41360 Lunay (FR)
(74) Mandataire: Brevalex

(56) Documents cités:
- WO-A1-2011/023906
- WO-A1-2017/109420

## Description

### DOMAINE TECHNIQUE ET ÉTAT DE LA TECHNIQUE ANTÉRIEURE

La présente invention se rapporte à un sous-ensemble pour système de transfert à double porte de fabrication simplifiée.

Dans un certain nombre de secteurs industriels, parmi lesquels on citera les secteurs nucléaire, médical, pharmaceutique et agroalimentaire, il est nécessaire ou souhaitable d'effectuer certaines tâches dans une atmosphère confinée, soit afin de protéger l'environnement, par exemple de la radioactivité, de la toxicité..., soit au contraire de pouvoir effectuer ces tâches dans une atmosphère aseptique ou exempte de poussière, soit enfin les deux simultanément.

Le transfert d'appareils ou de produits d'un volume clos à l'autre, sans qu'à aucun moment l'étanchéité de chacun de ces volumes vis-à-vis de l'extérieur ne soit rompue, pose un problème délicat à remplir. Ce problème peut être résolu par un dispositif de connexion à double porte.

Un dispositive à double porte muni d'une commande à multiple sécurités est connu du document WO 2011/023906 A1.

Un autre dispositif à double porte muni d'une commande à multiple sécurités est par exemple connu du document FR 2 695 343. Chaque volume est clos par une porte montée dans une bride. Chaque porte est solidarisée à sa bride par une liaison baïonnette et les deux brides sont destinées à être solidarisés l'une à l'autre par une liaison baïonnette.

Par exemple l'un des volumes clos est formé par un isolateur et l'autre volume est formé par un conteneur.

Classiquement la partie de connexion portée par l'isolateur est désignée partie alpha et la partie de connexion portée par le conteneur est désignée partie bêta.

La partie bêta peut équiper un conteneur rigide, un sac ou une gaine désignée « tubing », par exemple pour l'évacuation des déchets. Le tubing est une gaine souple généralement de grande longueur, pouvant atteindre 30 mètres, repliée sur elle-même autour d'un corps rigide. Il comporte une partie bêta montée sur le corps rigide. La gaine souple est dépliée au fur et à mesure à la longueur voulue, puis soudée et coupée. Le tubing permet de transférer des déchets ou des objets vers l'extérieur de l'isolateur, de manière semi-continue, sans rompre l'étanchéité.

Des joints sont prévus sur la partie alpha et sur la partie bêta pour assurer l'étanchéité entre les volumes connectés.

La bride bêta comporte une gorge dans laquelle est reçu un talon du joint de la partie bêta.

Le joint de la partie bêta est destiné à assurer à la fois :
- l'étanchéité entre la bride de la partie bêta et la porte de la partie bêta,
- l'étanchéité entre la bride bêta et la bride alpha, et
- l'étanchéité entre la bride bêta et le talon du joint.

Le montage du talon du joint dans la gorge de la bride est important car c'est notamment de lui dont dépend l'étanchéité entre le talon et la bride. L'opération de montage est délicate, le talon pouvant se tordre lors du montage.

L'opération de montage peut donc être difficile et longue, ce qui augmente les coûts de production. En outre, dans le cas d'une application dans le domaine pharmaceutique les sacs ou conteneurs équipés de la partie bêta sont fabriqués en salle blanche, ce qui rend le montage du joint dans la bride encore plus complexe.

En outre il existe un risque que le joint échappe la gorge, notamment lors d'un cycle d'autoclavage. La bride doit alors être conçue pour éviter ce phénomène.

### EXPOSÉ DE L'INVENTION

C'est par conséquent un but de la présente invention d'offrir un sous-ensemble pour système de transfert à double porte de fabrication simplifiée.

Le but énoncé ci-dessus est atteint par un sous-ensemble pour un système de transfert à double porte comportant une bride destinée à être obturée par une porte, un joint d'étanchéité solidaire de la bride, le sous-ensemble étant réalisé au moins en partie par surmoulage.-

Il n'y a alors plus d'opération de montage du joint dans la bride, le risque d'un montage non conforme est donc supprimé. Le temps de fabrication d'une partie bêta est alors réduit. Les risques de fuite sont également réduits.

Dans un exemple, la bride est réalisée préalablement et comporte une gorge, le joint est alors surmoulé sur la bride. De manière très avantageuse, la gorge comporte dans son fond des passages traversants par lesquels la matière du joint peut s'écouler, assurant un ancrage amélioré du joint sur bride.

Dans un exemple avantageux, un joint torique est monté serré sur la paroi radialement intérieure de la gorge de la bride préalablement au montage, ce qui améliore encore l'étanchéité entre la bride et le joint.

Dans un autre exemple de réalisation, le joint est réalisé préalablement et la bride est surmoulée sur le joint.

La présente invention a alors pour objet un sous-ensemble pour système de connexion étanche à double porte entre deux volumes clos, ledit système comprenant deux brides aptes à être solidarisées l'une à l'autre, et deux portes chacune obturant normalement une ouvertures délimitée par une bride, ledit sous-ensemble comportant une bride et un joint, ledit joint étant destiné à assurer un contact étanche entre la bride et le joint, entre le joint et l'autre bride du système de connexion et entre le joint et la porte obturant l'ouverture de ladite bride, le joint ou la bride étant une pièce surmoulée sur la bride ou le joint respectivement.

La bride comporte une gorge entourant son ouverture centrale, ladite gorge logeant une partie du joint.

La bride comporte au moins un canal de sorte que le matériau du joint s'étende entre l'intérieur de la bride et une surface radialement extérieure de la bride.

Au moins un canal relie l'intérieur de la gorge à la surface radialement extérieure de la bride.

Dans un exemple, le matériau du joint sur la surface radialement extérieure de la bride peut former une couronne entourant entièrement la bride.

Dans un autre exemple, le matériau du joint sur la surface radialement extérieure de la bride forme un manchon entourant entièrement la bride.

De préférence, le sous-ensemble comporte au moins un joint torique monté serré sur une paroi longitudinale radialement interne de la gorge, le joint étant surmoulé sur la bride et le joint torique. Avantageusement, le joint et le joint torique sont réalisés dans le même matériau.

Par exemple, la bride est en polymère thermoplastique et le joint est en polymère thermodurcissable ou polymère thermoplastique.

La présente invention a également pour objet un dispositif de transfert pour système de connexion étanche à double porte comportant un sous-ensemble selon l'invention, et un contenant solidaire de manière étanche de la bride.

Dans un exemple, le contenant est rigide et est d'un seul tenant avec la bride.

Dans un autre exemple, le contenant est souple et est fixé sur la bride. Le contenant souple peut être une gaine.

La présente invention a également pour objet un procédé de fabrication d'un sous-ensemble selon l'invention, comportant :
- la fourniture d'une bride,
- la mise en place d'un moule sur la bride définissant avec la bride la forme définitive du joint,
- l'injection du matériau plastique du joint dans le moule et dans et/ou sur la bride,
- le durcissement dudit matériau,
- l'éjection du sous-ensemble du moule.

Le procédé de fabrication peut comporter la fabrication de la bride par moulage de matériau thermoplastique.

La présente invention a également pour objet un procédé de fabrication d'un sous-ensemble selon l'invention comportant :
- la fourniture d'un joint,
- la mise en place d'un moule sur au moins une partie du joint, définissant avec le joint la forme définitive de la bride,
- l'injection du matériau plastique de la bride dans le moule et dans et/ou sur le joint,
- le durcissement dudit matériau,
- l'éjection du sous-ensemble du moule.

Le procédé peut comporter la fabrication du joint par moulage de matériau polymère thermoplastique ou thermodurcissable.

La présente invention a également pour objet un procédé de fabrication par bi-injection d'un sous-ensemble selon l'invention, comportant :
- fourniture d'au moins un moule définissant la forme extérieure définitive du sous-ensemble,
- injection dans le moule d'un premier matériau de la bride ou du joint,
- durcissement dudit premier matériau,
- injection dans le moule d'un deuxième matériau du joint ou de la bride,
- durcissement dudit deuxième matériau,
- éjection du sous-ensemble dudit moule.

### BRÈVE DESCRIPTION DES DESSINS

La présente invention sera mieux comprise sur la base de la description qui va suivre et des dessins en annexe sur lesquels :
La figure 1 est une vue en coupe longitudinale illustrant schématiquement le raccordement d'un conteneur sur une cellule au moyen d'un dispositif de transfert étanche à double porte par des moyens de type baïonnette.
La figure 2 est une vue en coupe du système de connexion à double porte, une partie bêta de l'état de la technique étant montée sur la partie alpha.
La figure 3A est une vue en coupe longitudinale d'un exemple de réalisation d'un sous-ensemble d'une partie bêta selon l'invention.
La figure 3B est une vue de détail de la figure 3A.
La figure 4 est une vue en perspective du sous-ensemble de la figure 3A.
La figure 5 est une vue en perspective de dessus de la bride du sous-ensemble de la figure 3A, sans le joint.
La figure 6 est une vue en perspective de côté d'une variante du sous-ensemble de la figure 3A.
La figure 7 est une vue en perspective d'un autre exemple de sous-ensemble selon l'invention.
La figure 8 est une vue en coupe longitudinale d'un autre exemple de sous-ensemble selon l'invention.
La figure 9 représente un système sans gorge, ne faisant pas partie de l'invention.

### EXPOSÉ DÉTAILLÉ DE MODES DE RÉALISATION PARTICULIERS

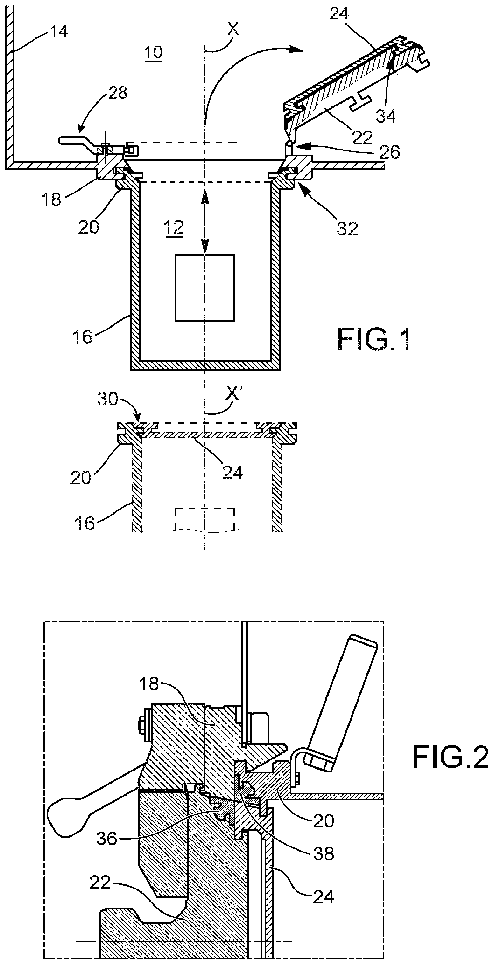

Sur la figure 1, on peut voir une représentation schématique d'un exemple de système de transfert à double porte.

Dans la description qui va suivre les deux volumes clos dont on souhaite tester l'étanchéité avant leur connexion correspondent respectivement à un isolateur 10 et à un conteneur 12. On comprendra cependant que l'invention est aussi applicable dans le cas où les volumes clos seraient de manière non limitative par exemple pour l'un une boîte à gant et pour l'autre un conteneur ou une boîte à gants.

L'isolateur 10 est délimité par une paroi 14 dont une partie seulement est visible sur la figure 1. Il est équipé, de façon classique, par exemple de moyens de manipulation à distance tels que des télémanipulateurs et/ou des gants (non représentés) solidaires de la paroi 14, grâce auxquels le mécanisme de commande centralisé peut être manoeuvré depuis l'intérieur de cette cellule 10. Le conteneur 12 est également délimité par une paroi 16, comme l'illustre notamment la figure 1.

Le dispositif de transfert étanche à double porte comprend principalement une bride d'isolateur 18, une bride de conteneur 20, une porte d'isolateur 22 obturant normalement une ouverture circulaire délimitée par la bride d'isolateur 18, et une porte de conteneur 24 obturant normalement une ouverture délimitée par la bride de conteneur 20. La bride d'isolateur 18 et la bride de conteneur 20 sont fixées respectivement sur la paroi 14 de la cellule 10 et sur la paroi 16 du conteneur 12. Dans cet exemple, la porte de l'isolateur 22 est articulée sur la bride d'isolateur 18 par une charnière 26.

Des moyens désignés de façon générale par la référence 28, permet de commander l'ouverture et la fermeture des portes 22 et 24.

Par exemple, la fixation de la porte de conteneur 24 sur la bride de conteneur 20 est assurée par une liaison à baïonnette 30 comme cela est décrit dans le document FR 2 695 343. Par exemple, pour permettre la solidarisation de la bride de conteneur 20 sur la bride d'isolateur 18 et la solidarisation de la porte de conteneur 24 sur la porte d'isolateur 22, le système de transfert étanche à double porte comprend également deux autres liaisons à baïonnette désignées respectivement par les références 32 et 34. Les trois liaisons à baïonnette 30, 32 et 34 sont agencées de telle sorte qu'après accostage de la bride de conteneur 20 sur la bride d'isolateur 18, une rotation du conteneur 12 autour de son axe, par exemple dans le sens des aiguilles d'une montre, a pour effet de solidariser la bride de conteneur 20 et la bride d'isolateur 18, de solidariser la porte de conteneur 24 et la porte d'isolateur 22, et de désolidariser la porte de conteneur 24 de la bride de conteneur 20. Ces deux dernières opérations s'effectuent de façon consécutive, de telle sorte que l'ouverture du conteneur n'intervient qu'après que la porte de conteneur 24 ait été solidarisée à la porte d'isolateur 22 pour former une double porte.

L'ensemble formé par la bride d'isolateur et la porte d'isolateur est désigné couramment « partie alpha ». L'ensemble formé par la bride de conteneur et la porte du conteneur est désigné couramment « partie bêta ».

En général le système de transfert à double porte présente une symétrie de révolution autour de l'axe X qui est l'axe de la bride d'isolateur.

Sur la figure 2, on peut voir une vue de détail du système à double porte en phase de verrouillage, la partie bêta étant montée sur la partie alpha. La partie alpha comporte un joint 36 monté sur la périphérie de la porte d'isolateur 22. Le joint 36 est en contact avec la bride alpha et la porte de conteneur de la partie bêta. La partie bêta comporte un joint 38 monté sur la bride 20 bordant l'ouverture obturée par la porte de conteneur 24. Le joint 38 est en contact avec la porte de conteneur 24 de la partie bêta et la face avant de la bride d'isolateur 18.

L'invention s'applique en particulier aux parties bêta comprenant par exemple un conteneur rigide, un sac souple ou une gaine.

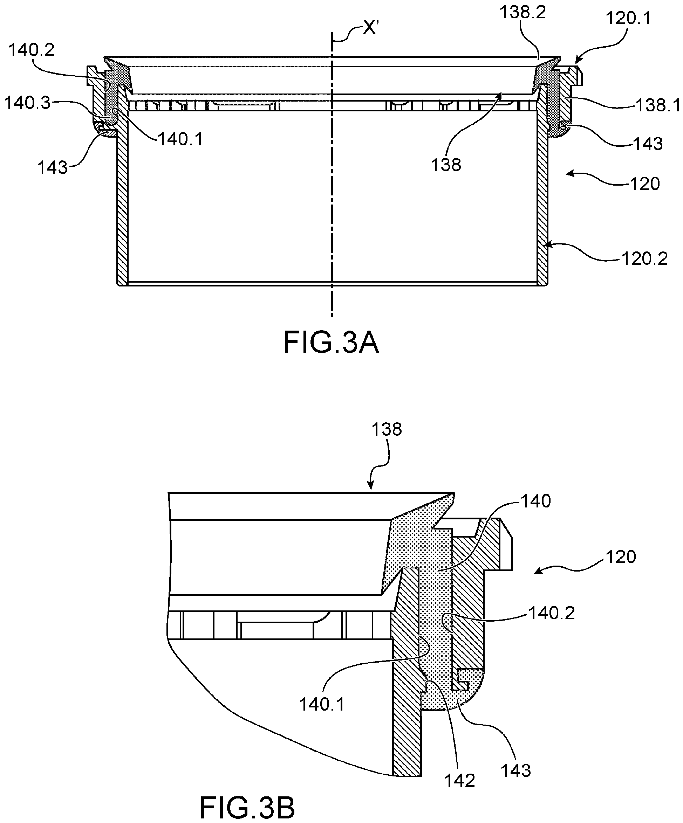

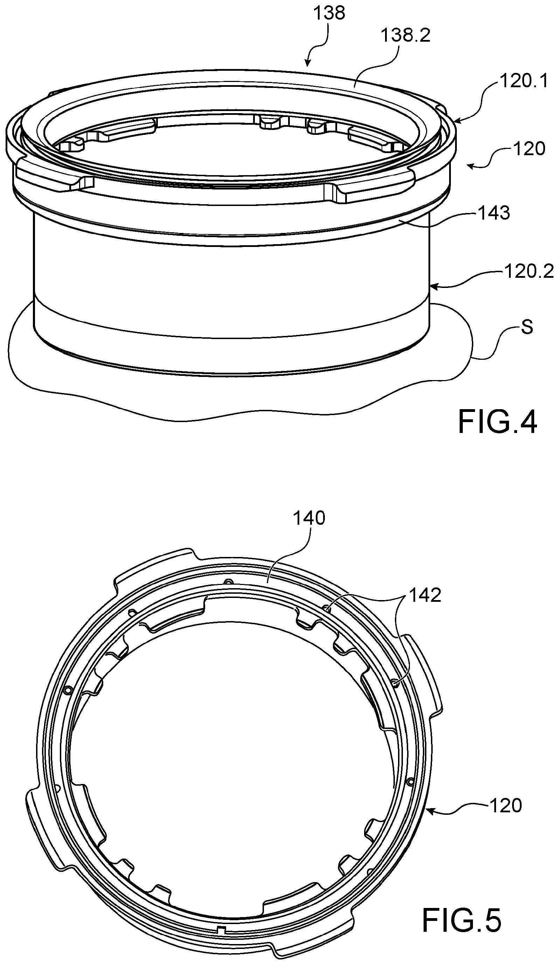

Sur la figure 3A, on peut voir une vue en coupe longitudinale d'un exemple de réalisation d'une bride 120 et d'un joint d'une partie bêta selon l'invention, formant un sous-ensemble de partie bêta, et sur la figure 3B, on peut voir une vue de détail de la figure 3A. Sur la figure 4, on peut voir la bride de la figure 3A vue en perspective sans la porte. Sur la figure 5, on peut voir la bride avant surmoulage du joint sur celle-ci.

Dans cet exemple, la connexion entre la porte 124 et la bride 120 est une connexion à baïonnette, et la connexion entre la bride 120 et la partie alpha est également de type à baïonnette. Ces connexions ne sont en aucun cas limitatives. Des moyens de connexion par encliquetage ou serrage sont également applicables.

La bride 120 présente une forme de révolution autour de l'axe X'.

La bride 120 comporte une première partie 120.1 comprenant les moyens de connexion à la partie alpha et les moyens coopérant avec la porte (non représentée) pour assurer son montage étanche dans la bride 120, et une deuxième partie 120.2, dans l'exemple représenté de forme tubulaire, prolongeant la première partie 120.1 et destinée à la fixation du contenant qui peut être rigide dans le cas d'un conteneur rigide ou souple dans le cas d'un sac, ou à la fixation d'une gaine par exemple pour réaliser un tubing. Sur la figure 4, un sac S fixé sur la deuxième partie 120.2 de la bride 120 est schématisé.

La bride 120 porte un joint 138 destiné à assurer à la fois l'étanchéité entre la bride 120 la porte 124, et entre la bride 120 et la partie alpha.

La bride 120 comporte une gorge 140 formée dans la première partie 120.1, entourant l'ouverture de la bride de conteneur 120. La gorge 140 débouche dans la face destinée à être en contact avec la partie alpha. La gorge 140 comporte une paroi radialement intérieure 140.1, une paroi radialement extérieure 140.2 et un fond 140.3.

La paroi radialement intérieure 140.1 et la paroi radialement extérieure 140.2 assurent le positionnement du joint 138 par rapport à la porte 14.

Le joint 138 est de forme annulaire et comporte une première partie 138.1 logée dans la gorge et une deuxième partie 138.2 faisant saillie de la gorge et destinée à venir radialement en contact avec la porte et longitudinalement en contact avec la bride de l'isolateur.

Dans l'exemple représenté et de manière avantageuse, le fond 140.3 de la gorge 140 est percé de trous 142 traversant le fond 140.3 et débouchant vers l'extérieur (figure 5).

Dans un exemple, le joint 138 est réalisé par surmoulage sur la bride. Le matériau du joint est injecté en partie dans la gorge. Dans cet exemple, le matériau du joint 138 s'écoule à travers les trous 142 du fond 140.3 et forme une couronne 143 entourant la deuxième partie 120.2 de la bride. L'ancrage du joint sur la bride est alors sensiblement augmenté.

Dans l'exemple représenté, la gorge 140 comporte des parois 140.1 et 140.2 tubulaires et concentriques. En variante, les parois et/ou le fond présentent des formes favorisant l'accroche du matériau du joint dans la gorge et améliorant l'étanchéité.

A titre d'exemple, la bride bêta est réalisée en matière plastique, avantageusement en thermoplastique, tel que le PE (Polyéthylène), le PC (Polycarbonate), le PSU (Polysulfone), le PP (Polypropylène), le Styrène acrylique copolymères par exemple commercialisé sous le nom Zylar^{®}, le POM (Polyoxyméthylène), le PET (G) (Polyéthylène Téréphtalate Glycolisé), le PVDF (Polyfluorure de vinylidène), l'ABS (Acrylonitrile Butadiène Styrène), le PBT (Polybutylène Téréphtalate).

Le joint 138 est de préférence réalisé en élastomère, par exemple en silicone thermodurcissable, en EPDM (Ethylène-Propylène-Diène Monomère) thermodurcissable, en résine de coulée silicone ou LSR (Liquid Silicone Resin en terminologie anglo-saxonne) thermodurcissable, en élastomère thermoplastique, en PVC (polyvinylchlorure).

De préférence, le choix des matériaux pour réaliser la bride et le joint est tel qu'une liaison chimique puisse apparaître entre le matériau du joint et celui de la bride. Par exemple, la bride est réalisée en PVC et le joint est réalisé en PVC. Selon un autre exemple, la bride est réalisée en en un matériau contenant du styrène, par exemple du Zylar^{®} ou ABS (Acrylonitrile Butadiène Styrène) ou polystyrène et le joint est réalisé en élastomère thermoplastique styrène (TPE-S). Selon un autre exemple, la bride est réalisée en Polyéthylène et le joint en élastomère thermoplastique oléfinique non vulcanisé (TPE-O). Selon un autre exemple, la bride est réalisée en polypropylène et le joint est réalisé en élastomère thermoplastique oléfinique vulcanisé (TPE-V). Selon un autre exemple, la bride est réalisée en polyuréthane et le joint est réalisé en élastomère thermoplastique polyuréthane (TPE-U). Selon un autre exemple, la bride est réalisée en polyester par exemple en Polyéthylène Téréphtalate Glycolisé (PET-G) ou en Polybutylène Téréphtalate (PBT) et le joint est réalisé en copolyester thermoplastique (TPE-E).

Des exemples de procédé de fabrication vont être décrits.

Un premier exemple de procédé de fabrication comporte :
- la fourniture d'une bride bêta 120,
- la mise en place d'un moule (non représenté) sur la bride 120 définissant avec la gorge la forme complète du joint,
- le surmoulage du joint par injection du matériau du joint dans le moule et la gorge 140,
- la solidification du joint 138, par exemple par chauffage dans le cas d'un matériau thermodurcissable, à une température au moins égale à la température de réticulation. Le matériau de la bride est alors choisi de sorte à être capable de supporter la température de réticulation.

Par exemple La bride est en polyéthylène et le joint est en silicone.

Dans cet exemple, la bride forme avantageusement une partie du moule du joint.

Dans l'exemple de figure 3A, dans lequel la gorge 140 est munie de trous 142 dans son fond 140.3, le moule est tel qu'il s'étend au-delà des trous afin de contenir le matériau passant par les trous et ainsi définir la forme de la partie du joint située en éloignement de la partie 138.2 faisant saillie de la gorge.

La bride 120 peut être réalisée par moulage, par exemple de thermoplastique. Avantageusement, dans le cas de la réalisation d'un conteneur, la bride et le contenant sont réalisés par moulage d'un seul tenant. Dans le cas d'un sac, le sac est par exemple fixé sur la bride par exemple par soudage ou est surmoulé sur la bride.

Un deuxième exemple de procédé de fabrication comporte :
- la fourniture du joint,
- la mise en place du joint dans un moule de la bride,
- l'injection du matériau de la bride dans le moule de sorte à surmouler la bride sur le joint,
- le durcissement du matériau de la bride.

Le joint est par exemple réalisé par moulage.

Le joint, notamment la première partie du joint, présente de préférence une forme favorisant l'ancrage de la bride sur le joint et l'étanchéité entre la bride et le joint. Ce deuxième exemple présente l'avantage de pouvoir mettre en oeuvre un joint dont la première partie présente une forme complexe particulièrement favorable à un bon ancrage de la bride.

Dans cet exemple, il peut être envisagé que la première partie du joint comporte des canaux traversant permettant au matériau de la bride de s'écouler à travers ceux-ci et ainsi de former des ancrages à travers le joint.

Les moules mis en oeuvre sont par exemple des moules en acier ou en alliage d'aluminium.

Dans un autre exemple, la bride et le joint peuvent être réalisés par injection bi-matière, le matériau de la bride étant injecté dans un outillage définissant la forme de la bride, puis le matériau du joint est injecté dans le même outillage.

Il existe différentes techniques de moulage par bi-injection applicables à la réalisation du sous-ensemble selon l'invention mettant en oeuvre des types de moule différents. Par exemple, l'une de ces techniques utilise des moules par transfert, dans lesquels la pièce est transférée manuellement ou par robot dans le même moule pour la seconde injection. Une autre de ces techniques utilise un moulage avec plateau rotatif, lors duquel le moule, qui est en partie mobile, fait une rotation de 180° pour placer le premier moulage dans l'empreinte de la deuxième matière. Cette rotation est assurée par les plateaux de la presse. Une autre technique utilise le moulage avec base rotative, qui utilise le même principe que le moule avec plateau rotatif mais pour laquelle le mécanisme de rotation est dans le moule. L'empreinte en partie mobile sort de la carcasse, tourne d'un demi-tour avant de revenir dans son logement. Une autre de ces techniques utilise un moule à écluse ou par recul de cale, dans lequel l'espace pour la seconde injection est libéré par un mouvement de noyau.

La fabrication de la bride de la partie bêta équipée du joint selon l'invention est plus rapide que selon les procédés de l'état de la technique. En outre, les risques de montage du joint provoquant un défaut d'étanchéité sont supprimés. De plus les risques d'éjection du joint hors de la bride sont également supprimés.

L'invention permet également d'éviter de devoir gérer des stocks de pièces à assembler.

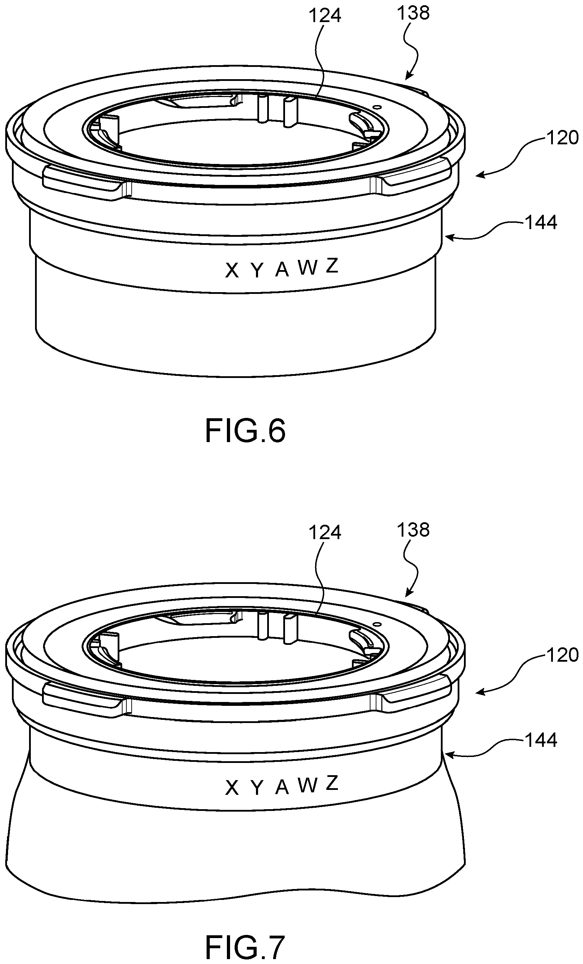

Sur la figure 6, on peut voir une variante de réalisation de l'ensemble bride et joint de la figure 3A, dans lequel le moulage est tel que le matériau du joint au-delà des trous 142 forme un manchon 144 recouvrant une partie de la deuxième partie 120.2. La porte de conteneur 124 obturant le passage central de la bride est représentée.

Le manchon 144 augmente l'ancrage du joint sur la bride et peut servir de support à des inscriptions, par exemple le modèle de la partie bêta et/ou la date de fabrication. L'inscription peut être en creux et/ou en relief et réalisée directement lors du moulage ou surmoulage et/ou être rapportée par exemple par impression.

Sur la figure 7, on peut voir un exemple avantageux de réalisation de l'ensemble bride et manchon de la figure 6, dans lequel un sac S est soudé directement sur le manchon 144. En variante, le sac est soudé sur la couronne 143 (figures 3A et 3B).

Cet exemple de réalisation simplifie le conteur et donc le procédé de réalisation, non seulement concernant le matériau de la bride car il ne requiert plus de compatibilité matière entre la deuxième partie 120.2 de la bride et le sac S, mais aussi concernant la forme de la bride car la deuxième partie 120.2 de la bride peut être sensiblement raccourcie.

Par exemple, le joint est réalisé en élastomère thermoplastique et le sac est réalisé dans le polymère de la même famille. A titre d'exemple, le joint est réalisé en élastomère thermoplastique polyéthylène (TPE-E) et le sac est réalisé en polyéthylène (PE). Selon un autre exemple, le joint est réalisé en élastomère thermoplastique polyuréthane (TPE-U) et le sac est réalisé en polyuréthane (PU).

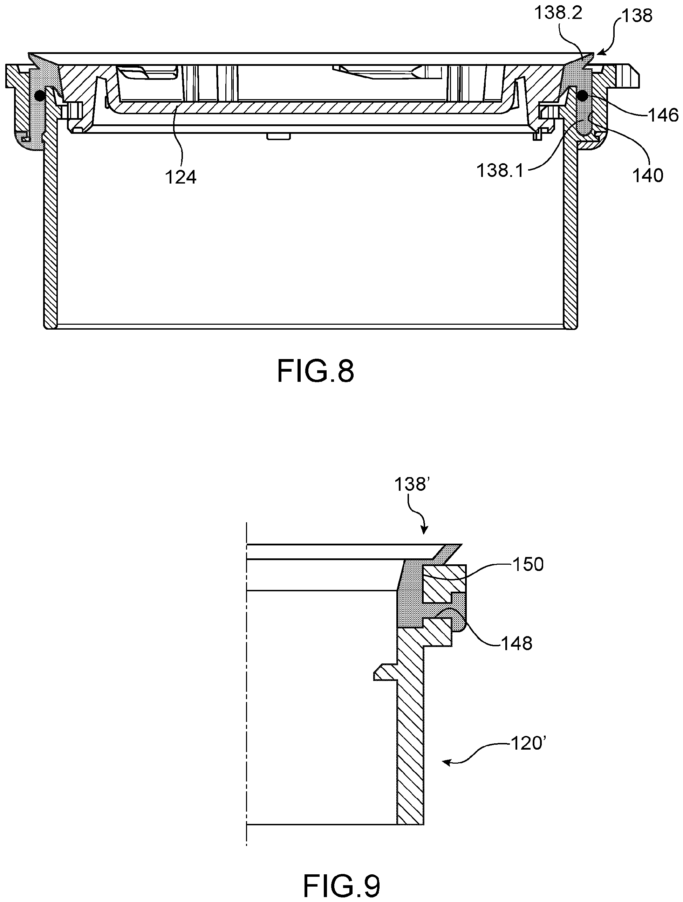

Sur la figure 8, on peut voir un autre exemple avantageux d'une bride bêta munie de son joint présentant une étanchéité entre le joint et la bride encore améliorée.

Dans cet exemple, un joint torique 146 est monté dans la gorge. Le joint torique 146 est monté serré contre la paroi radialement intérieure de la gorge. Le joint est alors surmoulé sur la bride et sur le joint torique.

De manière préférée, le joint torique 146 et le joint surmoulé sont réalisés dans le même matériau.

La mise en oeuvre d'un joint torique permet d'améliorer l'étanchéité entre le joint et la bride. En effet, le joint torique exerce un effort de compression permanent sur la bride, ce qui permet de maintenir l'étanchéité. Si un passage de fuite se formait entre le joint et la bride, il serait interrompu par le joint torique.

Plusieurs joints toriques peuvent être mis en oeuvre à différents emplacements longitudinaux dans la gorge.

Le sous-ensemble bride et joint de la partie alpha et/ou le sous-ensemble porte et joint de la partie alpha peuvent également être réalisés par surmoulage.

De la même façon, si la porte de la partie bêta requérait un joint, le sous-ensemble porte et joint pourrait être réalisé par surmoulage.

La mise en oeuvre du surmoulage permet d'éviter l'opération d'assemblage du joint sur la bride, qui peut endommager le joint et conduire à un défaut d'étanchéité et donc à un rejet de la partie bêta.

Le temps de fabrication est réduit et la fabrication est plus fiable. En outre cette technique permet de répondre plus facilement aux exigences liées aux atmosphères contrôlées telles que le taux de particules et la charge microbienne, dans le cas d'une fabrication en salle blanche.

En outre, la partie bêta ainsi obtenue est plus fiable du fait de l'ancrage du joint dans la bride, une meilleure tenue du joint dans la bride est obtenue et l'étanchéité entre le joint et sa bride est renforcée.

Le risque d'éjection du joint constaté avec les parties bêta de l'état de la technique lors de phase d'autoclavage est éliminé. Les moyens mis en oeuvre pour réduire le risque d'éjection peuvent être supprimés, ce qui réduit la complexité de la bride.

Selon un autre exemple de réalisation représenté sur la figure 9, la bride 120' ne comporte pas de gorge mais uniquement un lamage 150 bordant l'ouverture de la bride. Dans cet exemple, des canaux radiaux 148 traversants sont formés dans la bride 120' et assurent l'ancrage du joint 138' sur la bride. Cette variante simplifie la forme de la partie 120.1 de la bride de conteneur et donc la conception du moule de la bride.

## Revendications

1. Sous-ensemble pour système de connexion étanche à double porte entre deux volumes clos, ledit système comprenant deux brides aptes à être solidarisées l'une à l'autre, et deux portes chacune obturant normalement une ouvertures délimitée par une bride, ledit sous-ensemble comportant une bride (120) et un joint (138), ledit joint (138) étant destiné à assurer un contact étanche entre la bride (120) et le joint (138), entre le joint (138) et l'autre bride du système de connexion et entre le joint (138) et la porte (124) obturant l'ouverture de ladite bride, le joint (138) ou la bride (120) étant une pièce surmoulée sur la bride (120) ou le joint (138) respectivement, dans lequel la bride (120) comporte une gorge (140) qui entoure son ouverture centrale et loge une partie du joint (138), cette gorge (140) ayant un fond (140.3) muni de plusieurs trous (142) reliant l'intérieur de la gorge (140) à une surface radialement extérieure de la bride (120) de sorte que le matériau du joint s'étende entre l'intérieur de la gorge (140) et la surface radialement extérieure de la bride (120).

2. Sous-ensemble selon la revendication 1, dans lequel le matériau du joint (138) sur la surface radialement extérieure de la bride (120) forme une couronne (143) entourant entièrement la bride (120).

3. Sous-ensemble selon la revendication 1, dans lequel le matériau du joint (138) sur la surface radialement extérieure de la bride (120) forme un manchon (144) entourant entièrement la bride (120).

4. Sous-ensemble selon l'une des revendications 1 à 3 en combinaison avec la revendication 3, comportant au moins un joint torique (146) monté serré sur une paroi longitudinale radialement interne (140.1) de la gorge (140), le joint (138) étant surmoulé sur la bride (120) et le joint torique (146).

5. Sous-ensemble selon la revendication 4, dans lequel le joint (138) et le joint torique (146) sont réalisés dans le même matériau.

6. Sous-ensemble selon l'une des revendications 1 à 5, dans lequel la bride (120) est en polymère thermoplastique et le joint est en polymère thermodurcissable ou polymère thermoplastique. 12

7. Dispositif de transfert pour système de connexion étanche à double porte comportant un sous-ensemble selon l'une des revendications 1 à 6, et un contenant solidaire de manière étanche de la bride.

8. Dispositif de transfert selon la revendication 7, dans lequel le contenant est rigide et est d'un seul tenant avec la bride.

9. Procédé de fabrication d'un sous-ensemble selon l'une des revendications 1 à 6, comportant :
- la fourniture d'une bride (120),
- la mise en place d'un moule sur la bride (120) définissant avec la bride la forme définitive du joint,
- l'injection du matériau plastique du joint dans le moule et dans et/ou sur la bride,
- le durcissement dudit matériau,
- l'éjection du sous-ensemble du moule.

10. Procédé de fabrication selon la revendication 9, comportant la fabrication de la bride par moulage de matériau thermoplastique.

11. Procédé de fabrication d'un sous-ensemble selon l'une des revendications 1 à 6 comportant :
- la fourniture d'un joint (138),
- la mise en place d'un moule sur au moins une partie du joint, définissant avec le joint la forme définitive de la bride,
- l'injection du matériau plastique de la bride dans le moule et dans et/ou sur le joint,
- le durcissement dudit matériau,
- l'éjection du sous-ensemble du moule.

12. Procédé de fabrication selon la revendication 11, comportant la fabrication du joint par moulage de matériau polymère thermoplastique ou thermodurcissable.

13. Procédé de fabrication par bi-injection d'un sous-ensemble selon l'une des revendications 1 à 6, comportant :
- fourniture d'au moins un moule définissant la forme extérieure définitive du sous-ensemble,
- injection dans le moule d'un premier matériau de la bride ou du joint,
- durcissement dudit premier matériau,
- injection dans le moule d'un deuxième matériau du joint ou de la bride,
- durcissement dudit deuxième matériau,
- éjection du sous-ensemble dudit moule.

## Patentansprüche

1. Unterbaugruppe für ein dichtes Verbindungssystem mit doppelter Tür zwischen zwei geschlossenen Räumen, wobei das System zwei Flansche, die dazu geeignet sind, aneinander befestigt zu werden, und zwei Türen umfasst, von denen jede normalerweise eine durch einen Flansch begrenzte Öffnung verschließt, wobei die Unterbaugruppe einen Flansch (120) und eine Dichtung (138) umfasst, wobei die Dichtung (138) dazu bestimmt ist, einen dichten Kontakt zwischen dem Flansch (120) und der Dichtung (138), zwischen der Dichtung (138) und dem anderen Flansch des Verbindungssystems und zwischen der Dichtung (138) und der Tür (124), die die Öffnung des Flansches verschließt, zu gewährleisten, wobei die Dichtung (138) oder der Flansch (120) ein Bauteil ist, das auf den Flansch (120) bzw. die Dichtung (138) aufgeformt ist, wobei der Flansch (120) eine Nut (140) umfasst, die seine zentrale Öffnung umgibt und in einem Teil der Dichtung (138) untergebracht ist, wobei die Nut (140) einen Boden (140.3) aufweist, der mit mehreren Löchern (142) versehen ist, die die Innenseite der Nut (140) mit einer eine radial äußeren Oberfläche des Flansches (120) derart verbindet, dass sich das Material der Dichtung zwischen der Innenseite der Nut (140) und der radial äußeren Oberfläche des Flansches (120) erstreckt.

2. Unterbaugruppe nach Anspruch 1, wobei das Material der Dichtung (138) auf der radial äußeren Oberfläche des Flansches (120) einen Ring (143) bildet, der den Flansch (120) vollständig umgibt.

3. Unterbaugruppe nach Anspruch 1, wobei das Material der Dichtung (138) auf der radial äußeren Oberfläche des Flansches (120) eine Hülse (144) bildet, die den Flansch (120) vollständig umgibt.

4. Unterbaugruppe nach einem der Ansprüche 1 bis 3 in Kombination mit Anspruch 3, die mindestens eine O-Ring-Dichtung (146) umfasst, die festsitzend an einer radial inneren Längswand (140.1) der Nut (140) montiert ist, wobei die Dichtung (138) auf den Flansch (120) und die O-Ring-Dichtung (146) aufgeformt ist.

5. Unterbaugruppe nach Anspruch 4, wobei die Dichtung (138) und die O-Ring-Dichtung (146) aus dem gleichen Material hergestellt sind.

6. Unterbaugruppe nach einem der Ansprüche 1 bis 5, wobei der Flansch (120) aus thermoplastischem Polymer besteht und die Dichtung aus duroplastischem Polymer oder thermoplastischem Polymer besteht.

7. Transfervorrichtung für ein dichtes Verbindungssystem mit doppelter Tür, die eine Unterbaugruppe nach einem der Ansprüche 1 bis 6 und einen Behälter umfasst, der abdichtend am Flansch befestigt ist.

8. Transfervorrichtung nach Anspruch 7, wobei der Behälter starr und integral mit dem Flansch ist.

9. Verfahren zum Herstellen einer Unterbaugruppe nach einem der Ansprüche 1 bis 6, das Folgendes umfasst:
- Bereitstellen eines Flansches (120),
- Anordnen einer Form auf dem Flansch (120), die mit dem Flansch die endgültige Form der Dichtung definiert,
- Einspritzen des Kunststoffmaterials der Dichtung in die Form und in und/oder auf den Flansch,
- Aushärten des Materials,
- Auswerfen der Unterbaugruppe aus der Form.

10. Herstellungsverfahren nach Anspruch 9, das das Herstellen des Flansches durch Formen von thermoplastischem Material umfasst.

11. Verfahren zum Herstellen einer Unterbaugruppe nach einem der Ansprüche 1 bis 6, das Folgendes umfasst:
- Bereitstellen einer Dichtung (138),
- Anordnen einer Form auf mindestens einem Teil der Dichtung, die mit der Dichtung die endgültige Form des Flansches definiert,
- Einspritzen des Kunststoffmaterials des Flansches in die Form und in und/oder auf die Dichtung,
- Aushärten des Materials,
- Auswerfen der Unterbaugruppe aus der Form.

12. Herstellungsverfahren nach Anspruch 11, das das Herstellen der Dichtung durch Formen von thermoplastischem oder duroplastischem Polymermaterial umfasst.

13. Verfahren zum Herstellen einer Unterbaugruppe nach einem der Ansprüche 1 bis 6 durch Bi-Injektion, das Folgendes umfasst:
- Bereitstellen mindestens einer Form, die die endgültige äußere Form der Unterbaugruppe definiert,
- Einspritzen eines ersten Materials des Flansches oder der Dichtung in die Form,
- Aushärten des ersten Materials,
- Einspritzen eines zweiten Materials der Dichtung oder des Flansches in die Form,
- Aushärten des zweiten Materials,
- Auswerfen der Unterbaugruppe aus der Form.

## Claims

1. A subassembly for a double-door sealed connection system between two closed volumes, said system comprising two flanges capable of being secured to each other, and two doors each normally closing an opening delimited by a flange, said subassembly including a flange (120) and a seal (138), said seal (138) being intended to ensure sealed contact between the flange (120) and the seal (138), between the seal (138) and the other flange of the connection system and between the seal (138) and the door (124) closing the opening of said flange, the seal (138) or the flange (120) being a part over-molded on the flange (120) or the seal (138) respectively, wherein the flange (120) includes a groove (140) which surrounds its central opening and houses a portion of the seal (138), this groove (140) having a bottom (140.3) provided with a plurality of holes (142) connecting the interior of the groove (140) to a radially outer surface of the flange (120) such that the material of the seal extends between the interior of the groove (140) and the radially outer surface of the flange (120).

2. The subassembly according to claim 1, wherein the material of the seal (138) on the radially outer surface of the flange (120) forms a crown (143) entirely surrounding the flange (120).

3. The subassembly according to claim 1, wherein the material of the seal (138) on the radially outer surface of the flange (120) forms a sleeve (144) entirely surrounding the flange (120).

4. The subassembly according to one of claims 1 to 3 as combined with claim 3, including at least one O-ring (146) mounted tightly on a radially internal longitudinal wall (140.1) of the groove (140), the seal (138) being over-molded on the flange (120) and the O-ring (146).

5. The subassembly according to claim 4, wherein the seal (138) and the O-ring (146) are made of the same material.

6. The subassembly according to one of claims 1 to 5, wherein the flange (120) is made of a thermoplastic polymer and the seal is made of a thermosetting polymer or thermoplastic polymer.

7. A transfer device for a double-door sealed connection system including a subassembly according to one of claims 1 to 6, and a container integral in a sealed manner with the flange.

8. The transfer device according to claim 7, wherein the container is rigid and is integral with the flange.

9. A method for manufacturing a subassembly according to one of claims 1 to 6, including:
- providing a flange (120),
- placing a mold on the flange (120) defining with the flange the final shape of the seal,
- injecting the plastic material of the seal into the mold and into and/or onto the flange,
- hardening said material,
- ejecting the subassembly from the mold.

10. The manufacturing method according to claim 9, including manufacturing the flange by molding thermoplastic material.

11. The method for manufacturing a subassembly according to one of claims 1 to 6 including:
- providing a seal (138),
- placing a mold on at least a portion of the seal, defining with the seal the final shape of the flange,
- injecting the plastic material of the flange into the mold and into and/or onto the seal,
- hardening said material,
- ejecting the subassembly from the mold.

12. The manufacturing method according to claim 11, including manufacturing the seal by molding thermoplastic or thermosetting polymer material.

13. A method for manufacturing by bi-injection a subassembly according to one of claims 1 to 6, including:
- providing at least one mold defining the final external shape of the subassembly,
- injecting a first material of the flange or the seal into the mold,
- hardening said first material,
- injecting a second material of the seal or the flange into the mold,
- hardening said second material,
- ejecting the subassembly from said mold.
